# EUROPEAN PATENT APPLICATION

(11) **EP 4 708 394 A1**
(43) Date of publication of application: **11.03.2026**
(21) Application number: 25197478.8
(22) Date of filing: 21.08.2025
(51) Int. Cl.: H01M 4/36, H01M 4/525, H01M 4/58, H01M 10/052

(54) **CATHODE ACTIVE MATERIAL FOR LITHIUM SECONDARY BATTERY, CATHODE FOR LITHIUM SECONDARY BATTERY INCLUDING THE SAME AND LITHIUM SECONDARY BATTERY**

(30) Priority: 28.08.2024 KR 20240115963
(71) Applicant: SK On Co., Ltd., Seoul 03161 (KR)
(72) Inventor: PARK, Young Uk, Daejeon 34124 (KR); BEAK, Min Cheol, Daejeon 34124 (KR); KIM, Seung Hyun, Daejeon 34124 (KR); KANG, Min Suk, Daejeon 34124 (KR); KANG, Hyun Sung, Daejeon 34124 (KR); DO, Ji Yae, Daejeon 34124 (KR)
(74) Representative: Prüfer & Partner mbB Patentanwälte · Rechtsanwälte

(57) **Abstract**

A cathode active material for a lithium secondary battery, a cathode for a lithium secondary battery including the same, and a lithium secondary battery are provided. The cathode active material for a lithium secondary battery includes: a first cathode active material including a lithium-nickel metal oxide in the form of a single particle; and a second cathode active material including lithium manganese iron phosphate. Accordingly, a lithium secondary battery with improved cell safety and high energy density per unit cell volume may be achieved.

## Description

### [BACKGROUND OF THE INVENTION]

### 1. Field of the Invention

The disclosure of the present application relates to a cathode active material for a lithium secondary battery, a cathode for a lithium secondary battery including the same, and a lithium secondary battery. More specifically, the present disclosure relates to a cathode active material for a lithium secondary battery which includes a first cathode active material including a lithium-nickel metal oxide in the form of a single particle and a second cathode active material including lithium manganese iron phosphate, a cathode for a lithium secondary battery including the cathode active material, and a lithium secondary battery.

### 2. Description of the Related Art

Secondary batteries are batteries that can be repeatedly charged and discharged. With the development of the information, communication and display industries, secondary batteries have been widely applied as power sources for portable electronic communication devices, such as camcorders, mobile phones, and laptop PCs. In addition, battery packs including the secondary batteries have recently been developed and applied as power sources for eco-friendly vehicles, such as hybrid cars.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and weight reduction, such that development thereof is progressing in this regard.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are accommodated.

A lithium metal oxide may be used as a cathode active material of the lithium secondary battery. As the application scope of lithium secondary batteries continues to expand, more stable electrical characteristics, higher capacity, and high-rate characteristics are required. Accordingly, it is necessary to develop a cathode active material that exhibits high chemical and crystal stability and can provide improved electrical characteristics.

### [SUMMARY OF THE INVENTION]

An object of the present disclosure is to provide a cathode active material for a lithium secondary battery with improved structural stability and electrical characteristics.

Another object of the present disclosure is to provide a cathode for a lithium secondary battery with improved structural stability and electrical characteristics.

Yet another object of the present disclosure is to provide a lithium secondary battery with improved structural stability and electrical characteristics.

A cathode active material for a lithium secondary battery according to exemplary embodiments of the present disclosure includes: a first cathode active material including a lithium-nickel metal oxide in the form of a single particle; and a second cathode active material including lithium manganese iron phosphate.

In some embodiments, the first cathode active material further includes a lithium-nickel metal oxide in the form of a secondary particle, and the content ratio of the lithium-nickel metal oxide in the form of a single particle to the lithium-nickel metal oxide in the form of a secondary particle is 0.25 to 1.0.

In some embodiments, the first cathode active material further includes a lithium-nickel metal oxide in the form of a secondary particle, and the content of the lithium-nickel metal oxide in the form of a single particle is 20% by weight to 50% by weight based on the total weight of the first cathode active material.

In some embodiments, the lithium manganese iron phosphate includes 35 mol% to 75 mol% of manganese based on the total moles of elements excluding oxygen.

In some embodiments, the lithium-nickel metal oxide includes 80 mol% or more of nickel, based on the total moles of elements excluding oxygen.

In some embodiments, the first cathode active material includes a lithium-nickel metal oxide in the form of a single particle having a structure represented by Formula 1 below:

[Formula 1] Li_{b}NiₓCo_{y}Mn_{z}M1ₖO₂₊ₐ

In Formula 1, M1 includes at least one selected from the group consisting of Fe, Na, Mg, Ca, Ti, V, Cr, Cu, Zn, Ge, Sr, Ag, Ba, Zr, Nb, Al, Mo, Ga, W, Y, La, Ta and B, and 0.5≤x≤1.0, 0≤y≤0.3, 0≤z≤0.3, 0≤k≤0.2, x+y+z+k=1, 0≤a≤0.5, 0.9≤b≤1.2.

In some embodiments, the second cathode active material includes lithium manganese iron phosphate having a structure represented by Formula 2 below:

[Formula 2] Li_{f}Fe_{g}MnₕM3ᵢPO₄

In Formula 2, M3 is at least one selected from the group consisting of Ni, Co, Mg, Y, Zn, Ru, Ti, Nb, Mo, Cr, Cu, Zr, W, Ir and V, and 0.9≤f≤1.5, 0.01≤g≤0.65, 0.35≤h≤0.99, 0≤i≤0.1.

In some embodiments, the weight ratio of the first cathode active material based on the total weight of the cathode active material for a lithium secondary battery is 0.55 to 0.75.

In some embodiments, the weight ratio of the second cathode active material based on the total weight of the cathode active material for a lithium secondary battery is 0.25 to 0.45.

In some embodiments, the lithium-nickel metal oxide in the form of a single particle has a median particle diameter (D50) of 1 µm to 5 µm.

In some embodiments, the lithium-nickel metal oxide in the form of a secondary particle has a median particle diameter (D50) of 6 µm to 20 µm.

A cathode for a lithium secondary battery according to exemplary embodiments of the present disclosure includes: a cathode current collector; and a cathode active material layer disposed on the cathode current collector and including the cathode active material for a lithium secondary battery.

In some embodiments, a ratio of I(003)/I(104) measured on the surface of the cathode active material layer through X-ray diffraction (XRD) analysis is 2.5 to 18, wherein I(003) represents the peak intensity of a (003) plane measured through X-ray diffraction (XRD) analysis, and I(104) represents the peak intensity of a (104) plane measured through X-ray diffraction (XRD) analysis.

In some embodiments, the ratio of I(003)/I(104) is 2.5 to 12.

A lithium secondary battery according to exemplary embodiments of the present disclosure includes: the cathode for a lithium secondary battery; and an anode for a lithium secondary battery disposed to face the cathode for the lithium secondary battery.

The cathode active material for a lithium secondary battery according to the embodiments of the present disclosure may include a first cathode active material including a lithium-nickel metal oxide in the form of a single particle and a second cathode active material including lithium manganese iron phosphate.

According to exemplary embodiments, the high-capacity characteristics of the lithium secondary battery may be achieved through the first cathode active material. In particular, since the first cathode active material includes a lithium-nickel metal oxide in the form of a single particle, the specific surface area of the cathode active material may be reduced, thereby suppressing the voltage drop of the secondary battery. In addition, the stability of the lithium secondary battery may be ensured through the second cathode active material.

According to the embodiments of the present disclosure, the cathode active material particles may be prepared through a multi-step calcination process. The multi-step calcination process may improve the crystallinity of the cathode active material particles, and may stably maintain high-rate and low-resistance characteristics even during repeated charging and discharging.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic cross-sectional view illustrating a cathode for a lithium secondary battery according to exemplary embodiments; and
FIGS. 2 and 3 are schematic plan and cross-sectional views illustrating a lithium secondary battery according to exemplary embodiments, respectively.

### [DETAILED DESCRIPTION OF THE INVENTION]

The embodiments of the present disclosure provide a cathode active material for a lithium secondary battery, which includes: a first cathode active material including a lithium-nickel metal oxide in a single particle form; and a second cathode active material including lithium manganese iron phosphate.

The cathode active material and the lithium secondary battery according to the embodiments of the present disclosure may be widely applied in green technology fields, such as electric vehicles, battery charging stations, as well as solar power generation, wind power generation, and the like, which use the batteries. In addition, the lithium secondary battery according to the embodiments of the present disclosure may be used in eco-friendly electric vehicles, hybrid vehicles, and the like, which are aimed at mitigating climate change by reducing air pollution and greenhouse gas emissions.

Hereinafter, embodiments of the present disclosure will be described in detail with reference to the drawings. However, the embodiments are merely illustrative, and the present disclosure is not limited to the specific embodiments described by way of example.

In the exemplary embodiments, the cathode active material for a lithium secondary battery may include a first cathode active material including a lithium-nickel metal oxide in the form of a single particle, thereby reducing the specific surface area of the cathode active material and suppressing the voltage drop of the secondary battery. In addition, the second cathode active material including the lithium manganese iron phosphate may have an olivine structure in which cations are regularly arranged, thereby ensuring the thermal stability of the lithium secondary battery due to the strong covalent bond of PO₄.

The term "single particle form" as used herein may refer to a particle shape in which ten or fewer primary particles having a diameter of 2 µm or less are aggregated, and may be used to exclude the secondary particle structure. For example, a form in which a single primary particle exists as a substantially independent active material particle may be referred to as a "single particle."

In some embodiments, the primary particles may have a particle size of 1 µm or less, 900 nm or less (e.g., 50 nm to 900 nm, 100 nm to 900 nm), 800 nm or less, 600 nm or less, or 500 nm or less.

In some embodiments, a plurality of single particles (e.g., less than 10 single particles) may exist in a form in which they are adjacent to and adhered to one another (e.g., in a scanning electron microscope (SEM) cross-sectional image of the cathode active material layer). Such a form is not excluded from the definition of the single particle form.

In exemplary embodiments, the lithium-nickel metal oxide in the form of a single particle may have a median particle diameter (D50) of 1 µm to 5 µm.

In some embodiments, the lithium-nickel metal oxide in the form of a single particle may have a median particle diameter (D50) of 1 µm to 4.5 µm, 1 µm to 4 µm, 1 µm to 3 µm, 1.5 µm to 3 µm, or 2 µm to 3 µm.

Within the above-described particle diameter range, the voltage drop prevention by the first cathode active material may be more efficiently implemented.

In exemplary embodiments, the first cathode active material may further include a lithium-nickel metal oxide in the form of a secondary particle. For example, the first cathode active material may include only a lithium-nickel metal oxide in the form of a single particle, and the first cathode active material may include a lithium-nickel metal oxide in the form of a single particle and a lithium-nickel metal oxide in the form of a secondary particle.

The term "secondary particle" as used herein may refer to a form in which a plurality of single particles are aggregated and merged into a substantially single particle.

In some embodiments, the lithium-nickel metal oxide in the form of a secondary particle may have a median particle diameter (D50) of 6 µm to 20 µm.

In some embodiments, the lithium-nickel metal oxide in the form of a secondary particle may have a median particle diameter (D50) of 7 µm to 19 µm, 8 µm to 18 µm, 9 µm to 17 µm, 9 µm to 16 µm, 10 µm to 16 µm, or 10 µm to 15 µm.

Within the above-described particle diameter range, the resistance reduction effect through the lithium-nickel metal oxide in the form of a secondary particle may be more efficiently achieved.

As used herein, the term "median particle diameter (D50)" may refer to the particle diameter corresponding to 50% in the cumulative volume-based particle size distribution. The cumulative volume-based particle size distribution may be measured using a laser diffraction method. For example, the cathode active material particles may be dispersed in a dispersion solvent and introduced into a commercially available laser diffraction particle size analyzer (e.g., Microtrac MT 3000) to measure the median particle diameter.

In some embodiments, the second cathode active material including the lithium manganese iron phosphate may be in the form of a secondary particle. For example, the second cathode active material may have a median particle diameter (D50) of less than 20 µm, 19 µm or less, 10 µm or less, 5 µm or less, 3 µm or less, 2 µm or less, 1 µm or less, or 0.5 µm to 1.5 µm. The secondary particles may be irregularly shaped or spherical. When the secondary particles are irregularly shaped, the median particle diameter (D50) may be 0.5 µm to 1.5 µm. When the secondary particles are spherical, the median particle diameter (D50) of the secondary particles may be observed to be larger than that of the irregularly shaped particles, for example 10 µm to 19 µm. When irregularly shaped and spherical secondary particles are mixed, the median particle diameter (D50) may range from 0.5 µm to 19 µm.

In exemplary embodiments, the first cathode active material may further include a lithium-nickel metal oxide in the form of a secondary particle, and the content ratio of the lithium-nickel metal oxide in the form of a single particle to the lithium-nickel metal oxide in the form of a secondary particle may be 0.25 to 1.0.

In exemplary embodiments, the content ratio of the lithium-nickel metal oxide in the form of a single particle to the lithium-nickel metal oxide in the form of a secondary particle may be 0.25 to 0.7, 0.25 to 0.6, 0.25 to 0.5, or 0.25 to 0.45.

When the content ratio of the lithium-nickel metal oxide in the form of a single particle to the lithium-nickel metal oxide in the form of a secondary particle satisfies the above-described range, the overall resistance of the cathode active material may be reduced, and the voltage drop may be suppressed.

In exemplary embodiments, the first cathode active material may further include a lithium-nickel metal oxide in the form of a secondary particle, and the content of the lithium-nickel metal oxide in the form of a single particle may be 20% by weight ("wt%") to 50 wt% based on the total weight of the first cathode active material.

For example, the content of lithium-nickel metal oxide in the form of a single particle may be 25 wt% to 45 wt%, and the content of the lithium-nickel metal oxide in the form of a secondary particle may be 55 wt% to 75 wt% based on the total weight of the lithium-nickel metal oxide.

For example, the content of the lithium-nickel metal oxide in the form of a single particle may be 30 wt% to 45 wt%, 30 wt% to 40 wt%, or 30 wt% to 35 wt% based on the total weight of the lithium-nickel metal oxide, and the content of the lithium-nickel metal oxide in the form of a secondary particle may be 60 wt% to 75 wt%, 65 wt% to 75 wt%, or 70 wt% to 75 wt% based on the total weight of the lithium-nickel metal oxide.

In exemplary embodiments, the first cathode active material may further include a lithium-nickel metal oxide in the form of a secondary particle, and the content of the lithium-nickel metal oxide in the form of a secondary particle may be 50 wt% to 80 wt% based on the total weight of the first cathode active material.

When the content of the lithium-nickel metal oxide in the form of single particles and the content of the lithium-nickel metal oxide in the form of a secondary particle fall within the above-described wt% range, the overall resistance of the cathode active material may be reduced and the voltage drop may be suppressed.

In exemplary embodiments, the lithium manganese iron phosphate may include 35 mol% to 75 mol% of manganese, based on the total moles of elements excluding oxygen.

In exemplary embodiments, the lithium manganese iron phosphate may include 40 mol% to 70 mol%, 45 mol% to 65 mol%, or 50 mol% to 60 mol% of manganese, based on the total moles of elements excluding oxygen.

When the manganese content of the lithium manganese iron phosphate falls within the above-described range, the mechanical and electrical stability of the lithium secondary battery may be improved.

In exemplary embodiments, the lithium-nickel metal oxide may include 80 mol% or more of nickel, based on the total moles of elements excluding oxygen.

In exemplary embodiments, the lithium-nickel metal oxide may include 80 mol% to 90 mol%, 83 mol% to 90 mol%, 85 mol% to 90 mol%, or 86 mol% to 88 mol% of nickel, based on the total moles of elements excluding oxygen.

When the lithium-nickel metal oxide includes nickel within the above-described range, the capacity and output of the lithium secondary battery may be improved.

In exemplary embodiments, the first cathode active material may include a lithium-nickel metal oxide in the form of a single particle having a structure represented by Formula 1 below.

[Formula 1] Li_{b}NiₓCo_{y}Mn_{z}M1ₖO₂₊ₐ

In Formula 1, M1 includes at least one selected from the group consisting of Fe, Na, Mg, Ca, Ti, V, Cr, Cu, Zn, Ge, Sr, Ag, Ba, Zr, Nb, Al, Mo, Ga, W, Y, La, Ta and B, and x, y, z, k, a and b satisfy 0.5≤x≤1.0, 0≤y≤0.3, 0≤z≤0.3, 0≤k≤0.2, x+y+z+k=1, 0≤a≤0.5, and 0.9≤b≤1.2.

For example, x may be in the range of 0.6≤x≤0.9, 0.7≤x≤0.9, 0.8≤x≤0.9, 0.85≤x≤0.89 or 0.86≤x≤0.88, y may be in the range of 0.01≤y≤0.2, 0.02≤y≤0.1, 0.03≤y≤0.1, 0.04≤y≤0.1, 0.05≤y≤0.1, 0.06≤y≤0.1, 0.07≤y≤0.1 or 0.09≤y≤0.1, z may be in the range of 0.01≤z≤0.2, 0.02≤z≤0.1, 0.02≤z≤0.1, 0.02≤z≤0.06 or 0.03≤z≤0.05, k may be in the range of 0≤k≤0.1 or 0≤k≤0.01, a may be in the range of 0≤a≤0.4, 0≤a≤0.3, 0≤a≤0.2 or 0≤a≤0.1, b may be in the range of 0.9≤b≤1.1 or 0.9≤b≤1.

The chemical structure represented by Formula 1 above indicates the bonding relationship among elements included in the metal oxide structure in the form of a single particle, and does not exclude the presence of other additional elements. Formula 1 is provided to represent the bonding relationship among the main active elements, and should be understood as encompassing the incorporation or substitution of additional elements.

In exemplary embodiments, the second cathode active material may include lithium manganese iron phosphate having a structure represented by Formula 2 below.

[Formula 2] Li_{f}Fe_{g}MnₕM3ᵢPO₄

In Formula 2, M3 is at least one selected from the group consisting of Ni, Co, Mg, Y, Zn, Ru, Ti, Nb, Mo, Cr, Cu, Zr, W, Ir and V, and f, g, h and I satisfy 0.9≤f≤1.5, 0.01≤g≤0.65, 0.35≤h≤0.99, 0≤i≤0.1.

For example, f may be in the range of 0.9≤f≤1.3, 0.9≤f≤1.2 or 0.9≤f≤1.1, g may be in the range of 0.01≤g≤0.65, 0.1≤g≤0.65, 0.2≤g≤0.65, 0.3≤g≤0.65 or 0.4≤g≤0.65, and h may be in the range of 0.35≤h≤0.9, 0.35≤h≤0.8, 0.35≤h≤0.7 or 0.35≤h≤0.6.

The chemical structure represented by Formula 2 indicates the bonding relationship among elements included in the lithium manganese iron phosphate structure, and does not exclude other additional elements. Formula 2 is provided to represent the bonding relationship among the main active elements, and should be understood as encompassing the incorporation or substitution of additional elements.

The composition of the structure represented by Formula 1 or 2 and the content ratio of the second cathode active material to the first cathode active material may be analyzed by inductively coupled plasma (ICP) analysis.

In exemplary embodiments, the weight ratio of the first cathode active material based on the total weight of the cathode active material for a lithium secondary battery may be 0.55 to 0.75.

For example, the weight ratio of the first cathode active material based on the total weight of the cathode active material for a lithium secondary battery may be 0.6 to 0.75, 0.65 to 0.75, or 0.68 to 0.72.

In exemplary embodiments, the weight ratio of the second cathode active material based on the total weight of the cathode active material for a lithium secondary battery may be 0.25 to 0.45.

For example, the weight ratio of the second cathode active material based on the total weight of the cathode active material for a lithium secondary battery may be 0.25 to 0.4, 0.25 to 0.35, or 0.28 to 0.32.

When the weight ratios of the first cathode active material and the second cathode active material fall within the above-described range, the capacity, output, cycle life, and cell safety of the lithium secondary battery may be improved.

In exemplary embodiments, the cathode for a lithium secondary battery includes: the cathode current collector; and a cathode active material layer disposed on the cathode current collector and including the cathode active material for a lithium secondary battery according to claim 1.

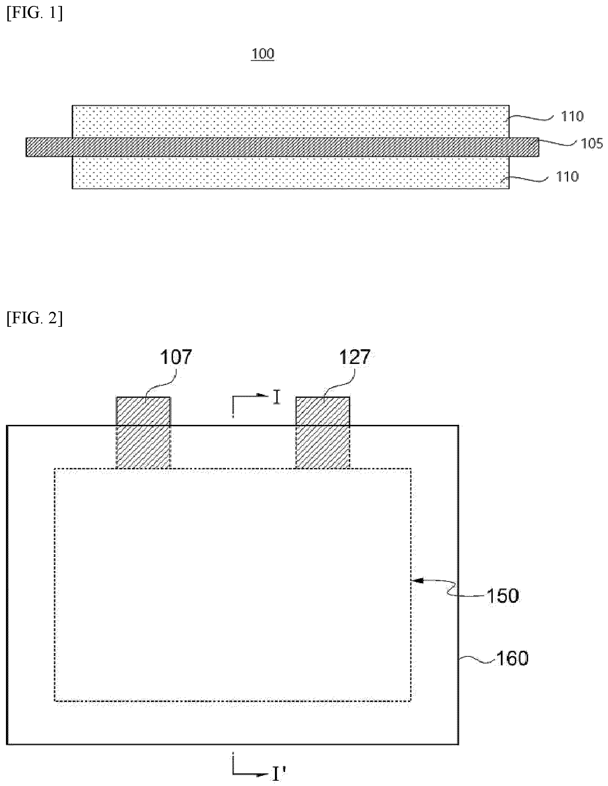

FIG. 1 is a schematic cross-sectional view illustrating a cathode for a lithium secondary battery according to exemplary embodiments.

Referring to FIG. 1, a cathode 100 for a lithium secondary battery (hereinafter, also abbreviated as a cathode) may include a cathode current collector 105 and a cathode active material layer 110 formed on at least one surface of the cathode current collector 105.

The cathode 100 may include the cathode current collector 105 and the cathode active material layer 110 formed on at least one surface of the cathode current collector 105. In some embodiments, the cathode active material layers 110 may be formed on each of both surfaces (upper and lower surfaces) of the cathode current collector 105.

The cathode active material layer 110 may include: a first cathode active material including a lithium-nickel metal oxide in the form of a single particle; and a cathode active material including a second cathode active material including lithium manganese iron phosphate.

In some embodiments, the ratio of I(003)/I(104) measured on the surface of the cathode active material layer through X-ray diffraction (XRD) analysis may be 2.5 to 18.

Here, I(003) represents the peak intensity of a (003) plane measured through X-ray diffraction (XRD) analysis, and I(104) represents the peak intensity of a (104) plane measured through X-ray diffraction (XRD) analysis.

The I(003)/I(104) value is the result of analyzing only the XRD peaks corresponding to the first cathode active material among the XRD patterns for a cathode for a lithium secondary battery including a first cathode active material including a lithium-nickel metal oxide in the form of a single particle and a second cathode active material including lithium manganese iron phosphate.

When the ratio of I(003)/I(104) is 2.5 to 18, it indicates that the first cathode active material is composed entirely of lithium-nickel metal oxide in the form of single particles, or that the first cathode active material is composed of a mixture of lithium-nickel metal oxide in the form of single particles and secondary particles.

In some embodiments, the ratio of I(003)/I(104) measured on the surface of the cathode active material layer through X-ray diffraction (XRD) analysis may be 2.5 to 12.

When the ratio of I(003)/I(104) is 2.5 to 12, it indicates that the lithium-nickel metal oxide in the form of a single particle accounts for 20 to 50 wt% based on the total weight of the first cathode active material. In some embodiments, the ratio of I(003)/I(104) may be 2.5 to 17, 2.5 to 16, 2.5 to 15, 2.5 to 14, 2.5 to 13, 2.5 to 11.5, or 2.7 to 11.2.

When the ratio of I(003)/I(104) falls within the above-described range, the overall resistance of the cathode active material may be reduced and the voltage drop may be suppressed, thereby improving the capacity and output of the lithium secondary battery.

Hereinafter, a method for preparing the cathode active material for a lithium secondary battery as described above is provided.

In some embodiments, the cathode active material for a lithium secondary battery may be prepared by separately preparing the first cathode active material and the second cathode active material, and mixing them in the above-described weight ratio range.

In some embodiments, an active material metal source may be reacted to prepare an active material precursor. The active material metal sources may include a manganese source and a nickel source. In one embodiment, the active material metal source may further include a cobalt source. In one embodiment, the active material metal source may further include an iron source. The active material metal source may refer to a metal source for preparing each of the first cathode active material and the second cathode active material.

Examples of the nickel source may include nickel sulfate (NiSO₄), nickel hydroxide (Ni(OH)₂), nickel nitrate (Ni(NO₃)₂), nickel acetate (Ni(CH₃CO₂)₂), or a hydrate thereof, etc.

Examples of the manganese source may include manganese sulfate (MnSO₄), manganese hydroxide (Mn(OH)₂), manganese nitrate (Mn(NO₃)₂), manganese acetate (Mn(CH₃CO₂)₂, manganese oxide (Mn₂O₃), or a hydrate thereof, etc.

Examples of the cobalt source may include cobalt sulfate (CoSO₄), cobalt hydroxide (Co(OH)₂), cobalt nitrate (Co(NO₃)₂), cobalt carbonate (CoCO₃), or a hydrate thereof, etc.

Examples of the iron source may include iron phosphate (FePO₄), etc.

In one embodiment, nickel sulfate, manganese sulfate and cobalt sulfate may be used as the nickel source, manganese source and cobalt source, respectively.

According to exemplary embodiments, the above-described active material sources may be mixed and reacted, for example, through a co-precipitation method, to obtain an active material precursor. For example, the active material precursor may be prepared in the form of nickel-manganese-cobalt hydroxide or nickel-manganese hydroxide.

A precipitant and/or a chelating agent may be used to promote the co-precipitation reaction. The precipitant may include an alkaline compound such as sodium hydroxide (NaOH), sodium carbonate (Na₂CO₃) and the like. The chelating agent may include, for example, ammonium hydroxide, ammonium carbonate and the like.

In some embodiments, a source of an element indicated by M1 in Formula 1 (an M1-containing source) may be introduced together with the metal sources for the active material.

In some embodiments, a source of an element indicated by M3 in Formula 2 (an M3-containing source) may be introduced together with the metal sources for the active material.

The metal sources for the active material may be mixed and reacted to satisfy the content ratio (molar ratio) described with reference to Formula 1 or 2.

The active material precursor may be mixed with a lithium source to prepare a mixture. In exemplary embodiments, the active material precursor and the lithium source may be mixed using a dry high-speed mixer.

The lithium source may include, for example, lithium carbonate (Li₂CO₃), lithium nitrate (LiNO₃), lithium acetate (CH₃COOLi), lithium oxide (Li₂O), lithium hydroxide (LiOH), lithium dihydrogen phosphate (LiH₂PO₄), etc. These may be used alone or in combination of two or more thereof. In one embodiment, lithium hydroxide, lithium carbonate, lithium dihydrogen phosphate, or a hydrate thereof may be used as the lithium source.

In some embodiments, a first calcination may be performed on a mixture including the active material precursor and the lithium source to form preliminary active material particles for preparing the first cathode active material in the form of a single particle.

According to embodiments of the present disclosure, the first calcination may be performed at a temperature of 840°C or higher. In one embodiment, the first calcination may be performed at a temperature in the range of 840°C to 1,050°C, 840°C to 1,000°C, 850°C to 990°C, 850°C to 985°C, or 850°C to 980°C.

Through the first calcination, the mixture is heat-treated at a sufficiently high temperature to promote sintering between the primary particles, thereby inducing sufficient growth of the primary particles, and forming preliminary active material particles in the form of single particles.

A second calcination may be performed on the preliminary active material particles prepared by the first calcination, thereby preparing the first cathode active material particles in the form of single particles.

According to embodiments of the present disclosure, the second calcination may be performed at a lower temperature than the first calcination. According to exemplary embodiments, the second calcination may be performed at a temperature of 835°C or lower.

The second calcination may be performed at a temperature relatively lower than the first calcination, thereby further enhancing crystallinity while suppressing additional grain growth. In some embodiments, the temperature of the second calcination may be 650°C to 835°C, 660°C to 830°C, 670°C to 830°C, 680°C to 830°C, or 700°C to 830°C.

Within the above temperature range, excessive grain growth may be more effectively suppressed while improving crystallinity.

The second calcination may be performed for a longer duration than the first calcination. In some embodiments, the first calcination may be performed for less than 8 hours. The second calcination may be performed for 8 hours or more, and for example, 9 hours or more, 10 hours or more, 11 hours or more, or 12 hours or more.

After the second calcination, the cathode active material particles for preparing the first cathode active material in the form of a single particle may be naturally cooled to room temperature, for example, and then subjected to pulverization and classification.

In some embodiments, calcination may be further performed on a mixture including the active material precursor and the lithium source to prepare first cathode active material particles in the form of secondary particles.

According to embodiments of the present disclosure, the calcination may be performed at a temperature of 700°C or more. In one embodiment, the calcination may be performed at a temperature in the range of 700°C to 800°C, 710°C to 800°C, 720°C to 790°C, 730°C to 780°C, or 750°C to 770°C. After the calcination, the cathode active material particles for preparing the first cathode active material in the form of a secondary particle may be naturally cooled to, for example, room temperature, and then subjected to pulverization and classification.

In some embodiments, a calcination may be performed on a mixture including an active material metal source and a lithium source satisfying the content ratio (molar ratio) described with reference to Formula 2 to prepare second cathode active material particles. The calcination may be performed at 800°C to 900°C, and then further performed at 650°C to 750°C.

In exemplary embodiments, a lithium secondary battery may include a cathode for a lithium secondary battery according to the present disclosure and an anode for a lithium secondary battery disposed to face the cathode for a lithium secondary battery.

In some embodiments, the cathode for a lithium secondary battery may be prepared from a cathode slurry prepared by mixing and stirring the cathode active material for a lithium secondary battery with a binder, a conductive material, and/or a dispersant in a solvent. The cathode slurry may be coated on at least one surface of the cathode current collector 105, and then dried and roll-pressed to fabricate the cathode 100.

For example, the cathode current collector 105 may include stainless steel, nickel, aluminum, titanium, or an alloy thereof. The cathode current collector 105 may also include aluminum or stainless steel having a surface treated with carbon, nickel, titanium or silver. For example, the cathode current collector 105 may have a thickness of 10 µm to 50 µm.

The binder may include polyvinylidene fluoride (PVDF), poly(vinylidene fluoride-co-hexafluoropropylene), polyacrylonitrile, polymethyl methacrylate, acrylonitrile butadiene rubber (NBR), polybutadiene rubber (BR), styrene-butadiene rubber (SBR), a polyacrylic acid-based binder, a poly(3,4-ethylenedioxythiophene (PEDOT)-based binder and the like. In some embodiments, a PVDF-based binder may be used as the cathode binder.

The conductive material may be added to enhance the conductivity and/or the mobility of lithium ions or electrons. For example, non-limiting examples of the conductive material may include carbon-based conductive materials such as graphite, carbon black, acetylene black, Ketjen black, graphene, carbon nanotubes (CNTs), vapor-grown carbon fibers (VGCFs), carbon fibers, and/or metal-based conductive materials, including perovskite materials, such as tin, tin oxide, titanium oxide, LaSrCoO₃, and LaSrMnO₃.

According to exemplary embodiments, the cathode active material layer 110 may have a density (electrode density or slurry density) of 2.8 g/cc or more, and in one embodiment, 3.0 g/cc or more. For example, the cathode active material layer 110 may have a density of 3.0 g/cc to 4.0 g/cc, or 3.0 g/cc to 3.5 g/cc.

Within the above density range, cracking of particles may be prevented, and the enhanced mechanical properties of the lithium-nickel metal oxide and the lithium manganese iron phosphate may be sufficiently achieved at the unit of the active material layer.

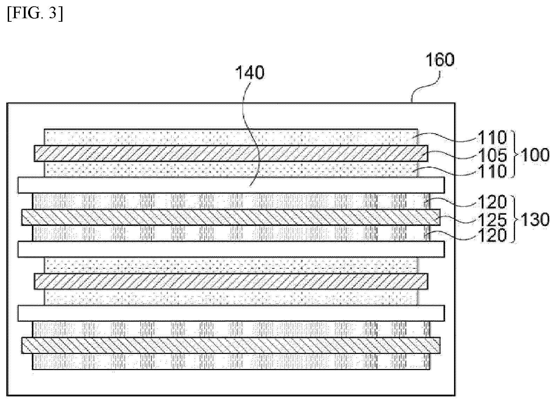

**FIGS.** 2 and 3 are schematic plan and cross-sectional views illustrating a lithium secondary battery according to exemplary embodiments, respectively. For example, FIG. 3 is a cross-sectional view taken along line I-I' of FIG. 2 in the thickness direction of the battery.

FIGS. 2 and 3 provide an exemplary lithium secondary battery for convenience of illustration, and the lithium secondary battery of the present disclosure is not limited to the structures shown in FIGS. 2 and 3.

Referring to FIGS. 2 and 3, the lithium secondary battery may include an electrode assembly 150 including the cathode 100 and the anode 130. The electrode assembly 150 may further include a separation membrane 140. A plurality of cathodes 100 and a plurality of anodes 130 may be laminated with the separation membrane 140 interposed therebetween to form the electrode assembly 150. The electrode assembly 150 may be accommodated in a case 160 together with an electrolyte to be impregnated.

The cathode 100 may include the cathode for a lithium secondary battery according to embodiments of the present disclosure described above with reference to FIG. 1.

The anode 130 may include an anode current collector 125 and an anode active material layer 120 formed on at least one surface of the anode current collector 125. The anode active material layer 120 may include an anode active material.

Non-limiting examples of the anode current collector 125 may include a copper foil, a nickel foil, a stainless steel foil, a titanium foil, a nickel foam, a copper foam, a polymer substrate coated with a conductive metal and the like. The anode current collector 125 may have a thickness of 10 µm to 50 µm, for example.

As the anode active material, any material known in the related art, so long as it can intercalate and deintercalate lithium ions, may be used without particular limitation thereof. For example, carbon-based materials such as crystalline carbon, amorphous carbon, carbon composite, carbon fibers, etc., a lithium alloy, a silicon-containing material, or a tin-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon-containing material may provide further increased capacity characteristics. The silicon-containing material may include Si, SiOx (0<x<2), a metal-doped SiOx (0<x<2), a silicon-carbon composite, etc. The metal may include lithium and/or magnesium, and the metal-doped SiOx (0<x<2) may include a metal silicate.

In some embodiments, an anode slurry may be prepared by mixing and stirring the anode active material with a binder, a conductive material and/or a dispersant in a solvent. The anode slurry may be applied to at least one surface of the anode current collector, and then dried and roll-pressed to prepare the anode 130.

As the binder and conductive material, materials substantially the same as or similar to the binder and conductive material included in the cathode may be used. In some embodiments, as the anode binder, a styrene-butadiene rubber (SBR)-based binder, carboxymethyl cellulose (CMC), polyacrylic acid-based binder, poly(3,4-ethylenedioxythiophene (PEDOT)-based binder, and the like may be used.

In some embodiments, the separation membrane 140 may be interposed between the cathode 100 and the anode 130. The separation membrane 140 may include a porous polymer film or a porous nonwoven fabric.

The porous polymer film may include a polyolefin polymer, such as an ethylene polymer, a propylene polymer, an ethylene/butene copolymer, an ethylene/hexene copolymer, and an ethylene/methacrylate copolymer.

The porous nonwoven fabric may include glass fibers having a high melting point, polyethylene terephthalate fibers, etc. The separation membrane 140 may also include a ceramic-based material. For example, inorganic particles may be applied to the polymer film or dispersed within the polymer film to improve heat resistance.

According to exemplary embodiments, an electrode cell is defined by the cathode 100, the anode 130 and the separation membrane 140, and a plurality of electrode cells are stacked to form, for example, the electrode assembly 150. The electrode assembly 150 may be of a winding type, a stacking type, a z-folding type, or a stack-folding type.

The electrode assembly 150 may be accommodated in the case 160 together with the electrolyte to define the lithium secondary battery. According to exemplary embodiments, a non-aqueous electrolyte may be used as the electrolyte.

The non-aqueous electrolyte may include a lithium salt of an electrolyte and an organic solvent. The lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfuroxide, acetonitrile, dimethoxyethane, diethoxyethane, vinylene carbonate, sulfolane, gamma-butyrolactone, propylene sulfite and tetrahydrofuran, etc. may be used. These may be used alone or in combination of two or more thereof.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode and the anode in place of the above-described separation membrane.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

As shown in FIG. 2, electrode tabs (cathode tabs and anode tabs) may protrude from each cathode current collector 105 and each anode current collector 125, respectively, which belong to each electrode cell, and may extend to one end portion of the case 160. The electrode tabs may be fused together with the one end portion of the case 160 to be connected with electrode leads (a cathode lead 107 and an anode lead 127) that extend or are exposed to the outside of the case 160.

In FIG. 2, the cathode lead 107 and the anode lead 127 are shown to protrude from an upper side of the case 160 in a planar direction, but positions of these electrode leads are not limited thereto. For example, the electrode leads may protrude from at least one of both sides of the case 160, or may protrude from a lower side of the case 160. Alternatively, the cathode lead 107 and the anode lead 127 may be formed to protrude from different sides of the case 160, respectively.

The lithium secondary battery may be manufactured, for example, in a cylindrical shape using a can, a prismatic shape, a pouch shape or a coin shape.

### Examples and Comparative Examples

### (1) Preparation of cathode active material

The first cathode active material and the second cathode active material in the weight ratio of Table 1 below were mixed to prepare cathode active materials of the examples and comparative examples.

**[TABLE 1]**

| Classification | First cathode active material (wt%) | Second cathode active material (wt%) |
|---|---|---|
| Example 1 | A1(42)+A2(18) | F(40) |
| Example 2 | A1(49)+A2(21) | F(30) |
| Example 3 | B(60) | G(40) |
| Example 4 | B(70) | G(30) |
| Example 5 | A1(56)+A2(24) | F(20) |
| Example 6 | A1(63)+A2(27) | F(10) |
| Example 7 | A1(42)+A2(18) | H(40) |
| Example 8 | A1(42)+A2(18) | I(40) |
| Example 9 | A1(49)+A2(21) | I(30) |
| Example 10 | A1(44)+A2(11) | F(45) |
| Example 11 | A1(45)+A2(30) | G(25) |
| Example 12 | A1(27.5)+A2(27.5) | F(45) |
| Example 13 | A1(37.5)+A2(37.5) | F(25) |
| Comparative Example 1 | C(50) | F(50) |
| Comparative Example 2 | C(50) | G(50) |
| Comparative Example 3 | D(70) | F(30) |
| Comparative Example 4 | C(100) | - |
| Comparative Example 5 | E(100) | - |
| < First cathode active material > | | |
| A1: LiNi_{0.33}Co_{0.09}Mn_{0.03}O₂ (Secondary particle, Median particle diameter: 13 µm) | | |
| A2: LiNi_{0.88}Co_{0.09}Mn_{0.03}O₂ (Single particle, Median particle diameter: 3 µm) | | |
| B: LiNi_{0.86}Co_{0.09}Mn_{0.05}O₂ (Single particle, Median particle diameter: 4 µm) | | |
| C: LiNi_{0.88}Co_{0.10}Mn_{0.02}O₂ (Secondary particle, Median particle diameter: 13 µm) | | |
| D: LiNi_{0.83}Co_{0.12}Mn_{0.05}O₂ (Secondary particle, Median particle diameter: 13 µm) | | |
| E: LiNi_{0.60}Co_{0.10}Mn_{0.30}O₂ (Single particle, Median particle diameter: 3 µm) | | |
| < Second cathode active material > | | |
| F: LiMn_{0.60}Fe_{0.40}PO₄ (Irregularly shaped-secondary particle, Median particle diameter: 1 µm) | | |
| G: LiMn_{0.50}Fe_{0.50}PO₄ (Irregularly shaped-secondary particle, Median particle diameter: 0.9 µm) | | |
| H: LiMn_{0.30}Fe_{0.70}PO₄ (Spherical secondary particle, Median particle diameter: 19 µm) | | |
| I: LiMn_{0.80}Fe_{0.20}PO₄ (Spherical secondary particle, Median particle diameter: 10 µm) | | |

### Preparation of first cathode active material (in the form of single particles)

NiSO₄, CoSO₄ and MnSO₄ were added to distilled water and mixed to satisfy the chemical compositions of particles A2, B and E described in Table 1. The distilled water was used after dissolved oxygen had been removed by bubbling nitrogen (N₂) through it for 24 hours.

Thereafter, the mixed solution was introduced into a reactor at 60 °C, NH₄OH was added to the reactor, and the mixture was stirred at a constant speed to prepare a transition metal solution. NaOH was then added to the reactor at a constant speed so that the molar ratio of the transition metal to NaOH in the transition metal solution was 1:2. Thereafter, a co-precipitation reaction was performed to prepare an active material precursor in the form of a hydroxide.

Lithium hydroxide as a lithium source and the active material precursor were introduced into a dry high-speed mixer, and uniformly mixed for about 5 minutes to prepare a mixture. The input molar ratio of lithium hydroxide was adjusted so that the Li/Me ratio matched the value described in Table 2.

For particles A2 and B, the mixture was put into a calcination furnace, heated to 850°C at a heating rate of 2°C/min, and maintained at 850°C for 7 hours to perform the first calcination. Thereafter, the calcination temperature was decreased to 700°C, and the second calcination was performed for 12 hours.

For particle E, the mixture was put into a calcination furnace, heated to 980°C at a heating rate of 2°C/min, and maintained at 980°C for 7 hours to perform the first calcination. Thereafter, the calcination temperature was decreased to 830°C, and the second calcination was performed for 12 hours.

After completion of the calcination, the mixture was naturally cooled to room temperature, and then pulverized and classified to prepare first cathode active material particles in the form of single particles. The median particle diameter of the prepared first cathode active material particles was measured as the particle diameter corresponding to the 50% point of the volume-based particle size distribution obtained using the laser diffraction method (Microtrac, MT 3000).

### Preparation of first cathode active material (in the form of secondary particles)

NiSO₄, CoSO₄, and MnSO₄ were added to distilled water and mixed to satisfy the chemical compositions of particles A1, C and D described in Table 1. The distilled water was used after dissolved oxygen had been removed by bubbling nitrogen (N₂) through it for 24 hours.

Thereafter, the mixed solution was introduced into a reactor at 60 °C, NH₄OH was added to the reactor, and the mixture was stirred at a constant speed to prepare a transition metal solution. NaOH was then added to the reactor at a constant speed so that the molar ratio of the transition metal to NaOH in the transition metal solution was 1:2. Thereafter, a co-precipitation reaction was performed to prepare an active material precursor in the form of a hydroxide.

Lithium hydroxide as a lithium source and the active material precursor were introduced into a dry high-speed mixer, and uniformly mixed for about 5 minutes to prepare a mixture. The input molar ratio of lithium hydroxide was adjusted so that the Li/Me ratio matched the value described in Table 2.

The mixture was put into a calcination furnace, heated to 760°C at a heating rate of 2°C/min, and maintained at 760°C for a predetermined period of time. During the calcination, oxygen was continuously supplied to the calcination furnace at a flow rate of 10 mL/min. After completion of the calcination, the mixture was naturally cooled to room temperature, and then pulverized and classified to prepare first cathode active material particles in the form of secondary particles.

The median particle diameter of the prepared first cathode active material particles was measured as the particle diameter corresponding to the 50% point of the volume-based particle size distribution obtained using the laser diffraction method (Microtrac, MT 3000).

### Preparation of second cathode active material

FePO₄, Mn₂O₃, LiH₂PO₄, Li₂CO₃ and an additive were added to DI water and mixed to satisfy the chemical compositions of F, G, H and I described in Table 1 above. Thereafter, the mixed solution was subjected to sand grinding and a dried mixture was prepared through a spray drying process.

The mixture was put into a calcination furnace, heated to 850°C at a heating rate of 2°C/min, and maintained at 850°C for a predetermined period of time. During the calcination, nitrogen was continuously supplied to the calcination furnace at a flow rate of 10 mL/min. After completion of the calcination, a carbon source for carbon coating and DI water were added. The mixed solution was then subjected to grinding and spray drying processes, and a second calcination was performed at 700°C by changing only the heat treatment temperature. The mixture was naturally cooled to room temperature, and then pulverized, classified, and de-ironed to prepare the second cathode active material.

### (2) Manufacture of secondary battery (coin-half cell and pouch full cell)

The cathode active material, carbon black, and PVDF were dispersed in N-methyl-2-pyrrolidone (NMP) at a weight ratio of 92:5:3 to prepare a cathode slurry.

The cathode slurry was applied to an aluminum foil (thickness: 20 µm), then dried and roll-pressed to fabricate a cathode. Lithium metal (thickness: 0.4 mm) was used as the counter electrode (anode).

The cathode and anode were laminated by notching them into circular shapes having a diameter of Φ14 and Φ16, respectively, and a separation membrane (polyethylene (PE), thickness: 13 µm) notched into Φ19 was interposed between the cathode and the anode to form an electrode assembly.

The electrode assembly was placed in a coin cell case (2016 standard), and an electrolyte was injected into the coin cell case to manufacture a preliminary lithium secondary battery.

The electrolyte used herein was prepared by dissolving a 1M LiPF₆ solution in a mixed solvent of ethylene carbonate (EC)/ethyl methyl carbonate (EMC) (30/70, v/v).

**The** preliminary lithium secondary battery was subjected to CC/CV charging (0.1C constant current, CC section CUT-OFF condition: 4.3V, CV section CUT-OFF condition: 0.05C) and CC discharging (0.1C constant current, 2.0 V CUT-OFF) at 25°C. Two charge and discharge cycles were performed to prepare an activated lithium secondary battery.

A method for manufacturing a pouch full cell for autoclave safety evaluation is as follows. The cathode active material, conductive material, and binder were dispersed in N-methyl-2-pyrrolidone (NMP) at a weight ratio of 97.6:1.2:1.2 to prepare a cathode slurry.

The cathode slurry was applied to an aluminum foil (thickness: 12 µm), dried and roll-pressed to fabricate a cathode having an electrode loading weight of 15 mg/cm² to 25 mg/cm² and a composite density of 2.3 g/cc to 3.7 g/cc.

As for the anode, a graphite-based anode active material, conductive material, and binder were dispersed in deionized water at a weight ratio of 94.5:3.0:2.5 to prepare an anode slurry.

The anode slurry was applied to a copper foil (thickness: 8 µm), dried, and roll-pressed to fabricate an anode having an electrode loading weight of 7 mg/cm² to 17 mg/cm² and a composite density of 1.3 g/cc to 1.7 g/cc.

An electrode assembly having a stacked structure (the number of stacks based on cathodes: 10 to 40) was formed by stacking the cathode and the anode with a separation membrane (polyethylene (PE) sheet coated with ceramic on one or both surfaces, thickness: 10 µm to 15 µm) interposed therebetween.

The electrode assembly was accommodated in a pouch case (DNP Co., Ltd.), and an electrolyte was injected to manufacture a preliminary full cell.

The electrolyte used herein was prepared by dissolving a 1M LiPF₆ solution in a mixed solvent of ethylene carbonate (EC)/ethyl methyl carbonate (EMC)/diethyl carbonate (DEC) (20:40:40 v/v).

The preliminary lithium secondary battery was subjected to CC/CV charging (0.2C constant current, CC section CUT-OFF condition: 4.2V (4.35V only for Comparative Example 5), CV section CUT-OFF condition: 0.05C) and CC discharging (0.2C constant current, 2.5 V CUT-OFF) at 25°C. Two charge and discharge cycles were performed to prepare an activated lithium secondary battery.

### Evaluation Example

### (1) Measurement of XRD peak ratio

The lithium secondary batteries of the examples and comparative examples were disassembled to obtain the cathodes, and the cathode active material layers were analyzed by X-ray diffraction (XRD).

The XRD analysis equipment and conditions are as described in Table 2 below.

The I(003)/I(104) values of the XRD analysis results of the examples and comparative examples are shown in Table 3 below. The I(003)/I(104) value is the result of analyzing only the XRD peaks corresponding to the first cathode active material among the XRD patterns for a cathode for a lithium secondary battery including a first cathode active material including a lithium-nickel metal oxide in the form of a single particle and a second cathode active material including lithium manganese iron phosphate.

The I(003)/I(104) values of Examples 1 to 13, which include A1, A2 and B including 80 mol% or more of nickel based on the total moles of elements excluding oxygen in the first cathode active material, are in the range of 2.73 to 11.17.

On the other hand, Comparative Examples 1 to 4, in which the first cathode active material includes lithium-nickel metal oxide in the form of a secondary particle, have I(003)/I(104) values of 1.33 to 2.08. In addition, Comparative Example 5, in which the first cathode active material includes 60 mol% of nickel based on the total moles of elements excluding oxygen in the lithium-nickel metal oxide, has an I(003)/I(104) value of 39.44.

**[TABLE 2]**

| XRD (X-Ray Diffractometer) (EMPYREAN) | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10 - 120° |
| Scan Step Size | 0.0065° |
| Divergence slit | 1/4° |
| Antiscatter slit | 1/2° |

### (2) Evaluation of battery performance

The energy density of the coin-half cells of the examples and comparative examples is described in Table 3 below.

In addition, the coin-half cells of the examples and comparative examples were charged and discharged under 1.0C conditions, and then the discharge capacity X was measured. Thereafter, in order to evaluate the cycle life characteristics, 1.0C charging and 1.0C discharging were performed for 500 cycles, and the discharge capacity Y was measured.

The percentage of the discharge capacity Y to the discharge capacity X (Y/X × 100%) was calculated, and the high-temperature cycle life capacity retention characteristics were evaluated.

To measure the maximum autoclave pressure, two pouch full cells with a total capacity of 30 Ah to 50 Ah were prepared and each charged to 4.2V. The cells were then placed in a 1,000 L autoclave, and heated using a heating pad until all cells reached a voltage of 0 V. The temperature and pressure inside the chamber during this process were recorded to calculate the maximum pressure.

The evaluation results are described in Table 3 below.

**[TABLE 3]**

| Classification | I(003)/I(104) | Energy density (Wh/L) | High-temperature cycle life capacity retention (%) | Autoclave maximum pressure (bar) |
|---|---|---|---|---|
| Example 1 | 3.02 | 630 | 91.8 | 0.22 |
| Example 2 | 3.79 | 650 | 92.5 | 0.32 |
| Example 3 | 9.39 | 627 | 92.2 | 0.19 |
| Example 4 | 11.17 | 644 | 93.4 | 0.27 |
| Example 5 | 4.56 | 670 | 93.1 | 0.67 |
| Example 6 | 5.33 | 690 | 93.6 | 0.84 |
| Example 7 | 3.13 | 618 | 94.6 | 0.25 |
| Example 8 | 3.46 | 634 | 72.3 | 0.27 |
| Example 9 | 4.01 | 646 | 73.0 | 0.39 |
| Example 10 | 2.73 | 619 | 79.3 | 0.19 |
| Example 11 | 6.21 | 654 | 93.0 | 0.64 |
| Example 12 | 7.38 | 615 | 82.7 | 0.18 |
| Example 13 | 8.84 | 652 | 93.2 | 0.61 |
| Comparative Example 1 | 1.33 | 610 | 74.5 | 0.17 |
| Comparative Example 2 | 1.33 | 608 | 75.1 | 0.16 |
| Comparative Example 3 | 1.49 | 647 | 93.5 | 2.47 |
| Comparative Example 4 | 2.08 | 710 | 75.5 | 2.99 |
| Comparative Example 5 | 39.44 | 660 | 97.0 | 2.35 |

Referring to Table 3, Examples 1 to 4 have an energy density of 620 Wh/L or more, a high-temperature cycle life capacity retention of 91% or more, and a maximum autoclave pressure of less than 0.4 bar, confirming that the cycle life and cell safety of the secondary battery are improved.

Examples 5 and 6 have high energy densities of 670 Wh/L or more, but the maximum autoclave pressure, which indicates cell safety, is 0.67 bar or more, indicating that the cell safety improvement effect is slightly lower than in Examples 1 to 4.

Example 7 shows an excellent high-temperature cycle life capacity retention of approximately 95% due to the application of LMFP material (H) having a Mn content of less than 35 mol%, but it has the disadvantage of a relatively low energy density.

On the other hand, Examples 8 and 9 use LMFP material (I) having a Mn content of more than 75 mol%, and although the energy density is relatively high at 634 Wh/L or more, the high-temperature cycle life capacity retention decreases to 73% or less.

Examples 10 and 12 have a high LMFP material content of 0.45 weight ratio, resulting in a maximum autoclave pressure of less than 0.2 bar, indicating very high cell safety, but the high-temperature cycle life capacity retention decreases to 83% or less, which is a disadvantage.

On the other hand, Examples 11 and 13 have a lower LMFP material content of 0.25 weight ratio, resulting in a high energy density of 650 Wh/L or more and an excellent high-temperature cycle life capacity retention of 93% or more, but the maximum autoclave pressure is 0.61 bar or more, indicating that the cell safety improvement effect is lower than in Examples 1 to 4.

Comparative Examples 1 and 2 show excellent cell safety with a maximum autoclave pressure of less than 0.4 bar, but the energy density is very low at 610 Wh/L or less, and the high-temperature cycle life capacity retention is less than 80%, indicating degraded cell performance.

Comparative Examples 3 and 5 show very poor cell safety with a maximum autoclave pressure of 2 bar or more, and Comparative Example 4 has an excellent energy density of 710 Wh/L, but the high-temperature cycle life capacity retention is less than 80%, and the maximum autoclave pressure is 2.99 bar, indicating that the cell safety is severely degraded.

The invention is also defined by the following aspects:
Aspect 1. A cathode active material for a lithium secondary battery comprising: a first cathode active material comprising a lithium-nickel metal oxide in the form of a single particle; and a second cathode active material comprising lithium manganese iron phosphate.
Aspect 2. The cathode active material for a lithium secondary battery according to aspect 1, wherein the first cathode active material further comprises a lithium-nickel metal oxide in the form of a secondary particle, and the content ratio of the lithium-nickel metal oxide in the form of a single particle to the lithium-nickel metal oxide in the form of a secondary particle is 0.25 to 1.0.
Aspect 3. The cathode active material for a lithium secondary battery according to aspect 1 or 2, wherein the first cathode active material further comprises a lithium-nickel metal oxide in the form of a secondary particle, and the content of the lithium-nickel metal oxide in the form of a single particle is 20% by weight to 50% by weight based on the total weight of the first cathode active material.
Aspect 4. The cathode active material for a lithium secondary battery according to any one of aspect 1 to 3, wherein the lithium manganese iron phosphate comprises 35 mol% to 75 mol% of manganese based on the total moles of elements excluding oxygen.
Aspect 5. The cathode active material for a lithium secondary battery according to any one of aspect 1 to 4, wherein the lithium-nickel metal oxide comprises 80 mol% or more of nickel, based on the total moles of elements excluding oxygen.
Aspect 6. The cathode active material for a lithium secondary battery according to any one of aspect 1 to 5, wherein the first cathode active material comprises a lithium-nickel metal oxide in the form of a single particle having a structure represented by Formula 1 below:

   [Formula 1] Li_{b}NiₓCo_{y}Mn_{z}M1ₖO₂₊ₐ

   (in Formula 1, M1 comprises at least one selected from the group consisting of Fe, Na, Mg, Ca, Ti, V, Cr, Cu, Zn, Ge, Sr, Ag, Ba, Zr, Nb, Al, Mo, Ga, W, Y, La, Ta and B, and 0.5≤x≤1.0, 0≤y≤0.3, 0≤z≤0.3, 0≤k≤0.2, x+y+z+k=1, 0≤a≤0.5, 0.9≤b≤1.2).
Aspect 7. The cathode active material for a lithium secondary battery according to any one of aspect 1 to 6, wherein the second cathode active material comprises lithium manganese iron phosphate having a structure represented by Formula 2 below:

   [Formula 2] Li_{f}Fe_{g}MnₕM3ᵢPO₄

   (in Formula 2, M3 is at least one selected from the group consisting of Ni, Co, Mg, Y, Zn, Ru, Ti, Nb, Mo, Cr, Cu, Zr, W, Ir and V, and 0.9≤f≤1.5, 0.01≤g≤0.65, 0.35≤h≤0.99, 0≤i≤0.1). Aspect 8. The cathode active material for a lithium secondary battery according to any one of claims 1 to 7, wherein the weight ratio of the first cathode active material based on the total weight of the cathode active material for a lithium secondary battery is 0.55 to 0.75.
Aspect 9. The cathode active material for a lithium secondary battery according to any one of aspect 1 to 8, wherein the weight ratio of the second cathode active material based on the total weight of the cathode active material for a lithium secondary battery is 0.25 to 0.45.
Aspect 10. The cathode active material for a lithium secondary battery according to any one of aspect 1 to 9, wherein the lithium-nickel metal oxide in the form of a single particle has a median particle diameter (D50) of 1 µm to 5 µm.
Aspect 11. The cathode active material for a lithium secondary battery according to any one of aspect 2 to 10, wherein the lithium-nickel metal oxide in the form of a secondary particle has a median particle diameter (D50) of 6 µm to 20 µm.
Aspect 12. A cathode for a lithium secondary battery:
   a cathode current collector; and
   a cathode active material layer disposed on the cathode current collector and comprising the cathode active material for a lithium secondary battery according to any one of aspect 1 to 11.
Aspect 13. The cathode for a lithium secondary battery according to aspect 12, wherein a ratio of I(003)/I(104) measured on the surface of the cathode active material layer through X-ray diffraction (XRD) analysis is 2.5 to 18,
   wherein I(003) represents the peak intensity of a (003) plane measured through X-ray diffraction (XRD) analysis, and I(104) represents the peak intensity of a (104) plane measured through X-ray diffraction (XRD) analysis.
Aspect 14. The cathode for a lithium secondary battery according to aspect 13, wherein the ratio of I(003)/I(104) is 2.5 to 12.
Aspect 15. A lithium secondary battery comprising:
   the cathode for a lithium secondary battery according to any one of aspect 12 to 14; and
   an anode for a lithium secondary battery disposed to face the cathode for the lithium secondary battery.

### [Description of Reference Numerals]

100: Cathode
105: Cathode current collector
107: Cathode lead
110: Cathode active material layer
120: Anode active material layer
125: Anode current collector
127: Anode lead
130: Anode
140: Separation membrane
150: Electrode assembly
160: Case

## Claims

1. A cathode active material for a lithium secondary battery comprising:
a first cathode active material comprising a lithium-nickel metal oxide in the form of a single particle; and
a second cathode active material comprising lithium manganese iron phosphate.

2. The cathode active material for a lithium secondary battery according to claim 1, wherein the first cathode active material further comprises a lithium-nickel metal oxide in the form of a secondary particle, and the content ratio of the lithium-nickel metal oxide in the form of a single particle to the lithium-nickel metal oxide in the form of a secondary particle is 0.25 to 1.0.

3. The cathode active material for a lithium secondary battery according to claim 1 or 2, wherein the first cathode active material further comprises a lithium-nickel metal oxide in the form of a secondary particle, and the content of the lithium-nickel metal oxide in the form of a single particle is 20% by weight to 50% by weight based on the total weight of the first cathode active material.

4. The cathode active material for a lithium secondary battery according to any one of claims 1 to 3, wherein the lithium manganese iron phosphate comprises 35 mol% to 75 mol% of manganese based on the total moles of elements excluding oxygen.

5. The cathode active material for a lithium secondary battery according to any one of claims 1 to 4, wherein the lithium-nickel metal oxide comprises 80 mol% or more of nickel, based on the total moles of elements excluding oxygen.

6. The cathode active material for a lithium secondary battery according to any one of claims 1 to 5, wherein the first cathode active material comprises a lithium-nickel metal oxide in the form of a single particle having a structure represented by Formula 1 below:
[Formula 1] Li_{b}NiₓCo_{y}Mn_{z}M1ₖO₂₊ₐ
(in Formula 1, M1 comprises at least one selected from the group consisting of Fe, Na, Mg, Ca, Ti, V, Cr, Cu, Zn, Ge, Sr, Ag, Ba, Zr, Nb, Al, Mo, Ga, W, Y, La, Ta and B, and 0.5≤x≤1.0, 0≤y≤0.3, 0≤z≤0.3, 0≤k≤0.2, x+y+z+k=1, 0≤a≤0.5, 0.9≤b≤1.2).

7. The cathode active material for a lithium secondary battery according to any one of claims 1 to 6, wherein the second cathode active material comprises lithium manganese iron phosphate having a structure represented by Formula 2 below:
[Formula 2] Li_{f}Fe_{g}MnₕM3ᵢPO₄
(in Formula 2, M3 is at least one selected from the group consisting of Ni, Co, Mg, Y, Zn, Ru, Ti, Nb, Mo, Cr, Cu, Zr, W, Ir and V, and 0.9≤f≤1.5, 0.01≤g≤0.65, 0.35≤h≤0.99, 0≤i≤0.1).

8. The cathode active material for a lithium secondary battery according to any one of claims 1 to 7, wherein the weight ratio of the first cathode active material based on the total weight of the cathode active material for a lithium secondary battery is 0.55 to 0.75.

9. The cathode active material for a lithium secondary battery according to any one of claims 1 to 8, wherein the weight ratio of the second cathode active material based on the total weight of the cathode active material for a lithium secondary battery is 0.25 to 0.45.

10. The cathode active material for a lithium secondary battery according to any one of claims 1 to 9, wherein the lithium-nickel metal oxide in the form of a single particle has a median particle diameter (D50) of 1 µm to 5 µm.

11. The cathode active material for a lithium secondary battery according to any one of claims 2 to 10, wherein the lithium-nickel metal oxide in the form of a secondary particle has a median particle diameter (D50) of 6 µm to 20 µm.

12. A cathode for a lithium secondary battery:
a cathode current collector; and
a cathode active material layer disposed on the cathode current collector and comprising the cathode active material for a lithium secondary battery according to any one of claims 1 to 11.

13. The cathode for a lithium secondary battery according to claim 12, wherein a ratio of I(003)/I(104) measured on the surface of the cathode active material layer through X-ray diffraction (XRD) analysis is 2.5 to 18,
wherein I(003) represents the peak intensity of a (003) plane measured through X-ray diffraction (XRD) analysis, and I(104) represents the peak intensity of a (104) plane measured through X-ray diffraction (XRD) analysis.

14. The cathode for a lithium secondary battery according to claim 13, wherein the ratio of I(003)/I(104) is 2.5 to 12.

15. A lithium secondary battery comprising:
the cathode for a lithium secondary battery according to any one of claims 12 to 14; and
an anode for a lithium secondary battery disposed to face the cathode for the lithium secondary battery.
